# EUROPEAN PATENT SPECIFICATION

(11) **EP 3 693 882 B1**
(45) Date of publication and mention of the grant of the patent: **03.09.2025**
(21) Application number: 20155648.7
(22) Date of filing: 05.02.2020
(51) Int. Cl.: H04L 9/40, G06F 21/57, H04W 12/08, H04W 12/122

(54) **CYBER DEFENSE AND RESPONSE SYSTEM FOR BUILDINGS**
CYBER-VERTEIDIGUNGS- UND ANTWORT-SYSTEM FÜR GEBÄUDE
CYBER DÉFENSE ET SYSTÈME DE RÉPONSE POUR LES BÂTIMENTS

(30) Priority: 05.02.2019 US 201962801348 P
(43) Date of publication of application: 12.08.2020
(73) Proprietor: Carrier Corporation, Palm Beach Gardens, FL 33418 (US)
(72) Inventor: ADETOLA, Veronica, Palm Beach Gardens, FL 33418 (US); SHILA, Devu Manikantan, Palm Beach Gardens, FL 33418 (US)
(74) Representative: Dehns

(56) References cited:
- US-A1- 2013 174 256
- US-A1- 2016 366 170
- US-A1- 2017 184 416
- US-A1- 2018 069 879
- US-A1- 2018 191 676

## Description

This present disclosure relates generally to a defense and response system for buildings.

Buildings, such as university buildings, office buildings, residential buildings, and the like, incorporate multiple electrically powered systems. Some or all of these systems are smart systems including Internet, or other network connectivity which facilitates remote control and operation of the building system through computer networks.

Due to their connections to a computer network, smart building systems can be vulnerable to hacking, malware, or other malicious activity. In addition, smart and non-smart building systems can undergo anomalous behaviors due to malfunctions or other operational irregularities. The anomalous activity can be the result of an individual attempting to attack the building, an individual attempting to use one or more building systems to indirectly attack other building systems, the power grid, or other buildings, or the result of accidental non-malicious activities and malfunctions.

US 2013/174256 discloses a computer network defense system including features for detecting highly-distributed, stealth network attacks.

US2016/366170 discloses systems and methods of detecting an attack in a utility grid using signals from controllers or metering devices.

The invention is defined by the independent claims.

Further embodiments are defined by the dependent claims.

Certain preferred embodiments will be described by way of example only and with reference to the drawings listed below. The embodiments, examples, and alternatives of the preceding paragraphs, the claims, or the following description and drawings, including any of their various aspects or respective individual features, may be taken independently or in any combination. Features described in connection with one embodiment are applicable to all embodiments, unless such features are incompatible.
Figure 1 schematically illustrates a building network.
Figure 2 schematically illustrates a cyber defense system for a building network.
Figure 3 schematically illustrates a method of detecting and responding to anomalies.

Smart building systems, or Cyber Physical Systems (CPS) infrastructures, may be susceptible to cyber attacks. Detection and response methods detect conditions that may be a result of such cyber attacks. However, known systems and methods detect anomalies in the system, and do not distinguish between cyber attacks and physical system faults, such as a failure of a particular system in the CPS. The system and method described herein distinguishes between cyber attacks and system faults, and provides an automated response when a cyber attack is detected.

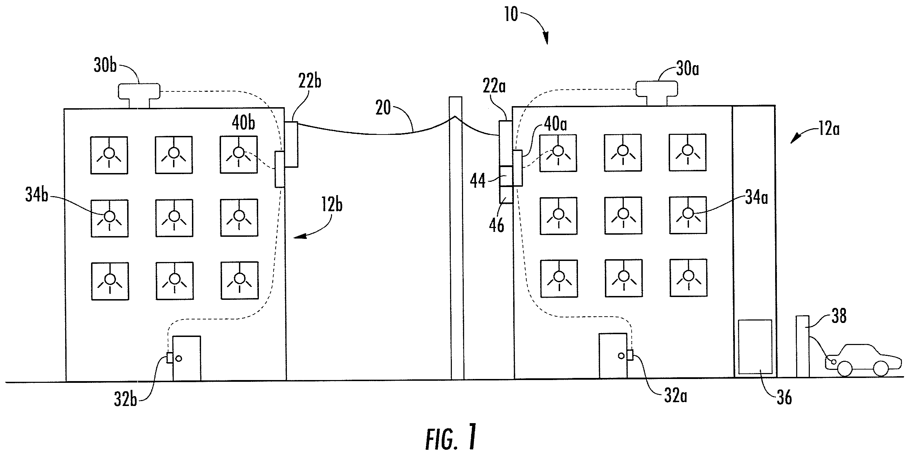

Figure 1 schematically illustrates an example smart building system 10. The building system 10 includes a first building 12a and a second building 12b. The building system 10 may include additional buildings, in some examples. The building 12a may include a heating, ventilation, and cooling (HVAC) system 30a, a door lock system 32a, a lighting system 34a, an elevator system 36 and an electrical vehicle charging system 38, for example. The second building 12b may also include an HVAC system 30b, a door lock system 32b, a lighting system 34b, and/or other systems. The first and second buildings 12a, 12b may have all the same building systems, or some different building systems. The disclosed example building systems 30-38 are exemplary in nature and any number of additional building systems can be incorporated into the buildings 12a, 12b and receive the benefits of the system and method disclosed herein.

In an example embodiment, each of the buildings 12a, 12b is connected to a power line 20 via grid interconnects 22a, 22b. Each of the building systems 30-38 may draw operational power from a building power distribution system, which is connected to the grid interconnect 22a, 22b, and draws power from the external power grid to power the building systems 30-38. Due to the reliance on drawing power through the grid interconnect 22, each of the building systems 30-38 is referred to as being "behind the meter". Although the buildings 12a, 12b are illustrated as being connected to the same power line 20, they may receive power from different power lines in some examples.

Each building 12a, 12b includes a respective computer network node 40a, 40b connected to at least some of the building systems 30-38. The nodes 40a, 40b collect information from each of the building systems. In some examples, the nodes 40a, 40b may be configured to detect the power characteristics being provided to the building 12a, 12b through the grid interconnect 22a, 22b. The nodes 40a, 40b may detect information such as current, voltage, frequency, active and reactive power, rate of change of frequency, and the like. In the illustrated example, the smart building systems are connected via wireless connections, although it should be appreciated that any other data connection can be utilized. The nodes 40a, 40b may receive data from the building systems via an external network, such as the Internet, for example.

The system 10 may include a building automation system 46, that sends signals to the nodes 40a, 40b and/or the building systems 30-38. In the illustrated example, the building automation system 46 is located on the building 12a, but in other examples, the building automation system 46 may be located remotely. The building automation system 46 may provide signals to all of the buildings 12a, 12b in the system 10, or to only some of the buildings 12a, 12b. The building automation system 46 may automate some or all of the example building systems 30-38. For example, the building automation system 46 may be programmed to automatically control the HVAC systems, 30a, 30b. The building automation system 46 may be connected to an external network, such as the Internet, to allow authorized users to access and control the building systems 30-38 from remote locations and from throughout the buildings 12a, 12b.

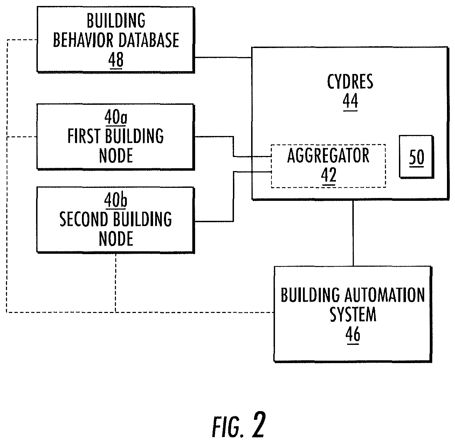

As shown in Figure 2, and with continuing reference to Figure 1, the system 10 includes a cyber defense response system (CYDRES) 44. The cyber defense response system 44 may include a modem or aggregator 42 in communication with the nodes 40a, 40b from each of the buildings 12a, 12b in the system 10. The aggregator 42 is, in turn, connected to an external network, such as the Internet, and may allow authorized users to access and control the building systems 30-38. In some embodiments, the aggregator 42 is integrated with the cyber defense response system 44. In other embodiments, the cyber defense response system 44 is separate from the aggregator 42, and they communicate through a wired or wireless connection. The building automation system 46 is in communication with the cyber defense response system 44. The building automation system 46 may be integrated into the cyber defense response system 44, in some examples.

The cyber defense response system 44 includes a computing device 50, which may include one or more controllers comprising a processor and memory. The computing device 50 may include a hardware device for executing software, particularly software stored in memory, such as a cyber attack detection algorithm. The computing device 50 may include a custom made or commercially available processor, a central processing unit (CPU), an auxiliary processor among several processors associated with the computing device 50, a semiconductor based microprocessor (in the form of a microchip or chip set), or generally any device for executing software instructions. The memory can include any one or combination of volatile memory elements (e.g., random access memory (RAM, such as DRAM, SRAM, SDRAM, VRAM, etc.)) and/or nonvolatile memory elements (e.g., ROM, hard drive, tape, CD-ROM, etc.). Moreover, the memory may incorporate electronic, magnetic, optical, and/or other types of storage media. Note that the memory can also have a distributed architecture, where various components are situated remotely from one another, but can be accessed by the processor.

The software in the memory may include one or more separate programs, each of which includes an ordered listing of executable instructions for implementing logical functions. A system component embodied as software may also be construed as a source program, executable program (object code), script, or any other entity comprising a set of instructions to be performed. When constructed as a source program, the program is translated via a compiler, assembler, interpreter, or the like, which may or may not be included within the memory.

The controller can be configured to execute software stored within the memory, to communicate data to and from the memory, and to generally control operations of the computing device 50 pursuant to the software. Software in memory, in whole or in part, is read by the processor, perhaps buffered within the processor, and then executed. This software may be used to analyze data from building systems to detect anomalies and determine whether the data indicate that the anomaly is the result of a cyber attack, for example.

The building automation system 46 and cyber defense response system 44 can then detect malicious activity occurring in one or more of the building systems 30-38 via embedded algorithms and the data from the building systems collected from the nodes 40a, 40b and/or building power characteristics. The cyber defense response system 44 compares data from the first node 40a to the second node 40b to determine anomalies. In one embodiment, the cyber defense response system 44 is connected to the nodes 40a, 40b, and the building automation system 46 wirelessly, such as via BLUETOOTH signaling protocol (IEEE 802.15.1), WiFi (IEEE 802.11), Zigbee (IEEE 802.15.4), Near-Field Communication (NFC), or another signaling protocol, for example.

The cyber defense response system 44 may also compare the data with a building behavior database 48 to help detect anomalies. The building behavior database 48 may include set values input by an operator for expected building behavior, and/or may store data over time to further improve algorithms. In an embodiment, the expected power characteristics of the building systems 30-38 may be continuously adapted in the cyber defense response system 44, and the system can account for seasonal variations in expected power characteristics. By way of example, the power characteristics of an air conditioner system will differ from those of a heating system, and the corresponding effect on the building power system will be distinct between a winter season and a summer season. In some embodiments, an operator can input feedback to the system, such that algorithms for localization and response are improved over time.

The cyber defense response system 44 is configured to detect anomalies in the system 10 by comparing data from the nodes 40a, 40b, the building behavior database 48, and the network. An anomaly in the system 10 may be due to a fault in one of the building systems 30-38, such as a failure of the HVAC system 30a or another building system, or may be a malicious cyber attack. If the anomaly is due to a failure of a building system, then the response might be to alert an operator so that the operator can fix the building system. However, if the anomaly is due to a cyber attack, a different response may be taken.

In one example, when a cyber attack or other malicious activity on one or more of the building systems 30-38 is launched using invalid commands, malware, or by changing the control parameters, the building systems 30-38 behave abnormally resulting in an anomaly in the power characteristics of the power passing through the grid interconnect 22. In an example, the nodes 40a, 40b and the cyber defense response system 44 are connected to a network, and the cyber defense response system 44 analyzes network behavior, such as traffic and delay, and system response. During a cyber attack, the attack may push a detectable or notable amount of data into the system 10. Thus, an increase in data traffic detected by the cyber defense response system 44 may be indicative of a cyber attack.

Comparing data from nodes 40a, 40b across different buildings 12a, 12b helps distinguish system faults from cyber attacks. For example, if a building system, such as an HVAC system 30a breaks down, it will not occur simultaneously across multiple buildings. However, a cyber attack may affect HVAC systems 30a, 30b across multiple buildings simultaneously. When an anomaly is detected across multiple buildings, it is likely a cyber attack.

If the anomaly detected is likely due to a cyber attack, the system 10 will respond with a targeted control response. In an embodiment, the system 10 commands the targeted control response automatically. The targeted control response may include automatically switching the building 12a, 12b to a resilient mode of operation based on the localized threat and estimated impact. The targeted control response may further include automated isolation and restoration of data and/or activation of resilient control logic. In one example, the response includes shutting down the system 10 to prevent the attack from infiltrating any further into the system 10 or any of the example building systems. The response may be to shut down the cyber defense response system 44, or to disconnect the cyber defense response system 44 and/or nodes 40a, 40b from the network. In another example, the response includes disconnecting the particular targeted building system 30-38 from the network. This automated response occurs quickly and may help mitigate harm from the attack.

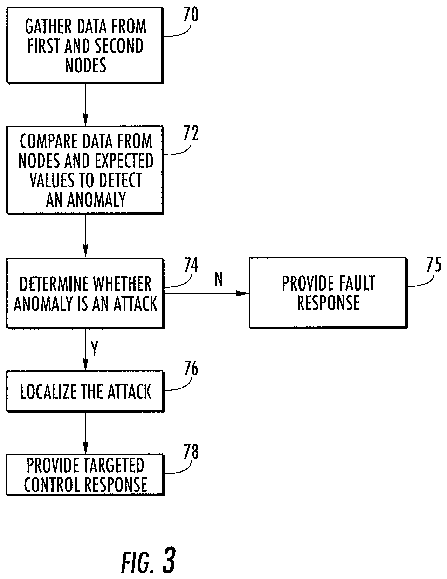

Figure 3 summarizes an example method of detecting and responding to anomalies. The cyber defense response system 44 gathers data from the nodes 40a, 40b located on different buildings 12a, 12b at 70. The cyber defense response system 44 compares the data from the first node 40a with the data from the second node 40b at 72. The cyber defense response system 44 also compares the data from the nodes 40a, 40b with expected values, such as values input by an operator or gathered over time from the building behavior database 48 at 72. When data from one or more of the nodes 40a, 40b deviates from the expected values, an anomaly is detected.

The cyber defense response system 44 analyzes the data and system to determine whether the detected anomaly is based on or resulting from a cyber attack or a system fault at 74. In one example, the cyber defense response system 44 analyzes network behavior, such as traffic and delay. In another example, the cyber defense response system 44 analyzes the variance of the data between the anomaly and the other nodes 40a, 40b and/or from the building behavior database 48. If the anomaly is not considered an attack, the cyber defense response system 44 provides a fault response at 75. In one example, the fault response includes sending an alert to an operator. If the anomaly is determined to be due to an attack, the cyber defense response system 44 localizes the attack at 76 to determine where the cyber attack is coming from and/or which building systems may be affected. The localization is based on analyzing data across building systems. For example, the cyber defense response system 44 may analyze individual equipment power characteristics, such as the installed HVAC 30a, 30b, the lighting systems 34a, 34b, power consumed by the building systems, and/or building system modes of operation and control data from the building automation system 46.

When a cyber attack is detected, the cyber defense response system 44 will respond with a targeted control response at 78. In one example, the response will include shutting down the system 10 or a portion of the system 10 to prevent the attack from infiltrating any further into the system 10. According to the invention the response will include disconnecting a building system from the network. For example, at least one of the buildings 12a, 12b, nodes 40a, 40b, and/or building systems 30-38 may be disconnected. In other examples, the building behavior database 48 and/or building automation system 46 may be disconnected from the network. In an embodiment, the targeted control response is automated.

The disclosed system and method analyze data from the system to determine whether an anomaly is a malicious cyber attack or a system fault. The disclosed system and method further helps mitigate the impact of a successful attack on building devices by providing means to locate, validate, and automatically respond to cyber attacks.

It is further understood that any of the above described concepts can be used alone or in combination with any or all of the other above described concepts. Although an embodiment of this invention has been disclosed, a worker of ordinary skill in this art would recognize that certain modifications would come within the scope of this invention, which is defined by the claims. For that reason, the following claims should be studied to determine the true scope and content of this invention.

## Claims

1. A method for a defense and response system for buildings, the method comprising:
determining a relationship between first data from a first smart building system (30a, 32a, 34a, 36a, 38) in communication with a first node (40a) and second data from a second smart building system (30b, 32b, 34b, 36b, 38) in communication with a second node (40b), wherein the smart building systems draw power from a building power distribution system (20), and wherein the first smart building system and/or the second smart building system comprises one of a heating, ventilation, and cooling, HVAC, system (30a, 30b), a door lock system (32a, 32b), a lighting system (34a, 34b), an elevator system (36a, 36b) or an electrical vehicle charging system(38);
using a cyber defense response system (44) in communication with the first node and the second node via a network, determining (72) whether there is an anomaly by comparing one of the first data and second data with a predetermined value;
using the cyber defense response system, determining (74) whether the anomaly is an attack or a fault based on the relationship;
the cyber defense response system providing (78) a targeted control response if the anomaly indicates an attack, the targeted control response including disconnecting one of the first and second smart building systems from the network; and
the cyber defense response system providing (75) a fault response if the anomaly indicates a fault.

2. The method of claim 1, wherein the predetermined value is input by an operator.

3. The method of claim 1, wherein the predetermined value is based on building data that was stored over time.

4. The method of any preceding claim, wherein the first smart building system (30a, 32a, 34a, 36a, 38) is on a first building and the second smart building system (30b, 32b, 34b, 36b, 38) is on a second building.

5. The method of any preceding claim, comprising: localizing the attack by determining a source of the anomaly.

6. The method of claim 5, comprising: integrating user feedback of the system for improved detection of the anomaly and attack localization.

7. The method of any preceding claim, wherein the first or second smart building system is a component of an HVAC system (30a, 30b).

8. The method of any preceding claim, wherein the first or second smart building system is a component of a lighting system (34a, 34b).

9. The method of any preceding claim, wherein the fault response includes sending an alert to an operator.

10. A defense and response system for buildings, comprising:
a first smart building system (30a, 32a, 34a, 36a, 38) communicating first data to a first node (40a);
a second smart building system (30b, 32b, 34b, 36b, 38) communicating second data to a second node (40b);
wherein the smart building systems draw power from a building power distribution system (20), and wherein the first smart building system and/or the second smart building system comprises one of a heating, ventilation and cooling, HVAC, system (30a, 30b), a door lock system (32a, 32b), a lighting system (34a, 34b), an elevator system (36a, 36b) or an electrical vehicle charging system (38); and
a cyber defense response system (44) in communication with the first node and the second node via a network;
wherein the cyber defense response system is configured to:
determine a relationship between the first data and the second data;
determine whether there is an anomaly by comparing one of the first data and second data with a predetermined value;
determine whether the anomaly is an attack or a fault based on the relationship; and
provide a targeted control response if the anomaly indicates an attack, the targeted control response including disconnecting one of the first and second smart building systems from the network; and
provide a fault response if the anomaly indicates a fault.

11. The defense and response system of claim 10, being configured to operate in accordance with the method of any of claims 1 to 9.

## Patentansprüche

1. Verfahren für ein Verteidigungs- und Reaktionssystem für Gebäude, wobei das Verfahren Folgendes umfasst:
Bestimmen einer Beziehung zwischen ersten Daten von einem ersten intelligenten Gebäudesystem (30a, 32a, 34a, 36a, 38), das mit einem ersten Knoten (40a) kommuniziert, und zweiten Daten von einem zweiten intelligenten Gebäudesystem (30b, 32b, 34b, 36b, 38), das mit einem zweiten Knoten (40b) kommuniziert, wobei die intelligenten Gebäudesysteme Energie von einem Gebäudeenergieverteilungssystem (20) beziehen, und wobei das erste intelligente Gebäudesystem und/oder das zweite intelligente Gebäudesystem eines der folgenden Systeme umfasst: ein Heizungs-, Lüftungs- und Kühlungssystem (HVAC-System) (30a, 30b), ein Türverschlusssystem (32a, 32b), ein Beleuchtungssystem (34a, 34b), ein Aufzugssystem (36a, 36b) oder ein Ladesystem für Elektrofahrzeuge (38);
unter Verwendung eines Cyberabwehr-Reaktionssystems (44), das über ein Netzwerk mit dem ersten Knoten und dem zweiten Knoten kommuniziert, Bestimmen (72), ob eine Anomalie vorliegt, indem entweder die ersten Daten oder die zweiten Daten mit einem vorbestimmten Wert verglichen werden;
Bestimmen (74), ob es sich bei der Anomalie um einen Angriff oder eine Störung handelt, und zwar unter Verwendung des Cyber-Abwehrsystems auf der Grundlage der Beziehung;
das Cyberabwehr-Reaktionssystem eine gezielte Kontrollreaktion bereitstellt (78), wenn die Anomalie einen Angriff anzeigt, wobei die gezielte Kontrollreaktion das Trennen eines der ersten und zweiten intelligenten Gebäudesysteme vom Netzwerk umfasst; und
das Cyberabwehr-Reaktionssystem eine Fehlerreaktion bereitstellt (75), wenn die Anomalie einen Fehler anzeigt.

2. Verfahren nach Anspruch 1, wobei der vorgegebene Wert von einem Bediener eingegeben wird.

3. Verfahren nach Anspruch 1, wobei der vorbestimmte Wert auf Gebäudedaten basiert, die im Laufe der Zeit gespeichert wurden.

4. Verfahren nach einem der vorhergehenden Ansprüche, wobei sich das erste intelligente Gebäudesystem (30a, 32a, 34a, 36a, 38) auf einem ersten Gebäude und das zweite intelligente Gebäudesystem (30b, 32b, 34b, 36b, 38) auf einem zweiten Gebäude befindet.

5. Verfahren nach einem der vorhergehenden Ansprüche, umfassend: Lokalisieren des Angriffs durch Bestimmen einer Quelle der Anomalie.

6. Verfahren nach Anspruch 5, umfassend: Integration von Benutzer-Feedback des Systems zur verbesserten Erkennung der Anomalie und Angriffslokalisierung.

7. Verfahren nach einem der vorhergehenden Ansprüche, wobei das erste oder zweite intelligente Gebäudesystem eine Komponente eines Heizungs-, Lüftungs- und Kühlungssystems (HLK-System) (30a, 30b) ist.

8. Verfahren nach einem der vorhergehenden Ansprüche, wobei das erste oder zweite intelligente Gebäudesystem eine Komponente eines Beleuchtungssystems (34a, 34b) ist.

9. Verfahren nach einem der vorhergehenden Ansprüche, wobei die Fehlerreaktion das Senden einer Warnung an einen Bediener umfasst.

10. Verteidigungs- und Reaktionssystem für Gebäude, umfassend:
ein erstes intelligentes Gebäudesystem (30a, 32a, 34a, 36a, 38), das erste Daten an einen ersten Knoten (40a) übermittelt;
ein zweites intelligentes Gebäudesystem (30b, 32b, 34b, 36b, 38), das zweite Daten an einen zweiten Knoten (40b) übermittelt;
wobei die intelligenten Gebäudesysteme Energie von einem Gebäudeenergieverteilungssystem (20) beziehen, und wobei das erste intelligente Gebäudesystem und/oder das zweite intelligente Gebäudesystem eines der folgenden Systeme umfasst:
ein Heizungs-, Lüftungs- und Kühlungssystem (HVAC-System) (30a, 30b), ein Türverschlusssystem (32a, 32b), ein Beleuchtungssystem (34a, 34b), ein Aufzugssystem (36a, 36b) oder ein Ladesystem für Elektrofahrzeuge (38); und
ein Cyberabwehr-Reaktionssystem (44), das über ein Netzwerk mit dem ersten Knoten und dem zweiten Knoten kommuniziert;
wobei das Cyberabwehr-Reaktionssystem so konfiguriert ist, dass es:
eine Beziehung zwischen den ersten Daten und den zweiten Daten bestimmt;
feststellt, ob eine Anomalie vorliegt, indem eine der ersten und zweiten Daten mit einem vorbestimmten Wert verglichen wird;
bestimmt, ob die Anomalie ein Angriff oder ein Fehler ist, basierend auf der Beziehung; und
eine gezielte Kontrollreaktion bereitstellt, wenn die Anomalie einen Angriff anzeigt, wobei die gezielte Kontrollreaktion das Trennen eines der ersten und zweiten intelligenten Gebäudesysteme vom Netzwerk umfasst; und eine Fehlerreaktion bereitstellt, wenn die Anomalie einen Fehler anzeigt.

11. Verteidigungs- und Reaktionssystem nach Anspruch 10, das so konfiguriert ist, dass es gemäß dem Verfahren nach einem der Ansprüche 1 bis 9 arbeitet.

## Revendications

1. Procédé pour un système de défense et de réponse pour les bâtiments, le procédé comprenant :
la détermination d'une relation entre des premières données provenant d'un premier système de bâtiment intelligent (30a, 32a, 34a, 36a, 38) en communication avec un premier nœud (40a) et des secondes données provenant d'un second système de bâtiment intelligent (30b, 32b, 34b, 36b, 38) en communication avec un second nœud (40b), dans lequel les systèmes de bâtiment intelligent tirent leur énergie d'un système de distribution d'énergie pour bâtiment (20), et dans lequel le premier système de bâtiment intelligent et/ou le second système de bâtiment intelligent comprend un système de chauffage, de ventilation et de climatisation, CVC (30a, 30b), un système de verrouillage de porte (32a, 32b), un système d'éclairage (34a, 34b), un système d'ascenseur (36a, 36b) ou un système de charge de véhicule électrique (38) ;
à l'aide d'un système de réponse de cyberdéfense (44) en communication avec le premier nœud et le second nœud via un réseau, le fait de déterminer (72) s'il existe une anomalie en comparant une des premières données et des secondes données avec une valeur prédéterminée ;
à l'aide du système de réponse de cyberdéfense, le fait de déterminer (74) si l'anomalie est une attaque ou une défaillance sur la base de la relation ;
la fourniture, par le système de réponse de cyberdéfense (78), d'une réponse de commande ciblée si l'anomalie indique une attaque, la réponse de commande ciblée comportant la déconnexion d'un des premier et second systèmes de bâtiment intelligent du réseau ; et
la fourniture, par le système de réponse de cyberdéfense (75), d'une réponse à la défaillance si l'anomalie indique une défaillance.

2. Procédé selon la revendication 1, dans lequel la valeur prédéterminée est entrée par un opérateur.

3. Procédé selon la revendication 1, dans lequel la valeur prédéterminée est basée sur des données de bâtiment qui ont été stockées au fil du temps.

4. Procédé selon une quelconque revendication précédente, dans lequel le premier système de bâtiment intelligent (30a, 32a, 34a, 36a, 38) se trouve sur un premier bâtiment et le second système de bâtiment intelligent (30b, 32b, 34b, 36b, 38) se trouve sur un second bâtiment.

5. Procédé selon une quelconque revendication précédente, comprenant : la localisation de l'attaque par détermination d'une source de l'anomalie.

6. Procédé selon la revendication 5, comprenant : l'intégration d'un retour utilisateur du système pour améliorer la détection de l'anomalie et la localisation de l'attaque.

7. Procédé selon une quelconque revendication précédente, dans lequel le premier ou le second système de bâtiment intelligent est un composant d'un système CVC (30a, 30b).

8. Procédé selon une quelconque revendication précédente, dans lequel le premier ou le second système de bâtiment intelligent est un composant d'un système d'éclairage (34a, 34b).

9. Procédé selon une quelconque revendication précédente, dans lequel la réponse à la défaillance comporte l'envoi d'une alerte à un opérateur.

10. Système de défense et de réponse pour les bâtiments, comprenant :
un premier système de bâtiment intelligent (30a, 32a, 34a, 36a, 38) communiquant des premières données à un premier nœud (40a) ; un second système de bâtiment intelligent (30b, 32b, 34b, 36b, 38) communiquant des secondes données à un second nœud (40b) ; dans lequel les systèmes de bâtiment intelligent tirent leur énergie d'un système de distribution d'énergie pour bâtiment (20), et dans lequel le premier système de bâtiment intelligent et/ou le second système de bâtiment intelligent comprend un système de chauffage, de ventilation et de climatisation, CVC (30a, 30b), un système de verrouillage de porte (32a, 32b), un système d'éclairage (34a, 34b), un système d'ascenseur (36a, 36b) ou un système de charge de véhicule électrique (38) ; et un système de réponse de cyberdéfense (44) en communication avec le premier nœud et le second nœud via un réseau ;
dans lequel le système de réponse de cyberdéfense est configuré pour :
déterminer une relation entre les premières données et les secondes données ;
déterminer s'il existe une anomalie en comparant une des premières données et des secondes données avec une valeur prédéterminée ;
déterminer si l'anomalie est une attaque ou une défaillance sur la base de la relation ; et
fournir une réponse de commande ciblée si l'anomalie indique une attaque, la réponse de commande ciblée comportant la déconnexion d'un des premier et second systèmes de bâtiment intelligent du réseau ; et fournir une réponse à la défaillance si l'anomalie indique une défaillance.

11. Système de défense et de réponse selon la revendication 10, configuré pour fonctionner conformément au procédé selon l'une quelconque des revendications 1 à 9.
